(19) **Europäisches Patentamt / European Patent Office / Office européen des brevets**

(11) **EP 1 217 024 B1**

(12) **EUROPEAN PATENT SPECIFICATION**

(45) Date of publication and mention of the grant of the patent:
**12.03.2008 Bulletin 2008/11**

(51) Int Cl.:
*C08G 63/78* (2006.01)    *C08G 63/82* (2006.01)
*D06P 3/52* (2006.01)    *D01F 6/62* (2006.01)
*D01F 6/84* (2006.01)    *D01F 6/92* (2006.01)
*C08G 63/688* (2006.01)

(21) Application number: **01129585.4**

(22) Date of filing: **12.12.2001**

(54) **Process for the preparation of spinnable and dyeable polyester resins**

Verfahren um verspinnbare und anfärbare Polyester herzustellen

Procédé pour la préparation des polyesters appropriés pour le filage et susceptible de la teinture

(84) Designated Contracting States:
**AT BE CH CY DE DK ES FI FR GB GR IE IT LI LU MC NL PT SE TR**

(30) Priority: **21.12.2000 IT MI002773**

(43) Date of publication of application:
**26.06.2002 Bulletin 2002/26**

(73) Proprietor: **Montefibre S.p.A.**
**20131 Milano (IT)**

(72) Inventors:
• **Bisbiglia, Maria Arzano,**
  **(Napoli) (IT)**
• **Contessa, Socrate**
  **Salerno (IT)**
• **Francalanci, Franco**
  **Novara (IT)**

(74) Representative: **De Gregori, Antonella et al**
**Ing. Barzano' & Zanardo Milano S.p.A.**
**Via Borgonuovo 10**
**20121 Milano (IT)**

(56) References cited:
**US-A- 6 018 004**

• **RAMA RAO B ET AL: "IONOMERIC POLYESTER FIBER" TEXTILE CHEMIST AND COLORIST, AM. ASSOC. OF TEXTILE CHEMISTS AND COLORISTS. NORT CAROLINA, US, vol. 28, no. 10, 1 October 1996 (1996-10-01), pages 17-24, XP000635384 ISSN: 0040-490X**
• **DATABASE WPI Week 8336 Derwent Publications Ltd., London, GB; AN 1983-755314 XP002189172 & JP 58 126376 A (UNITIKA LTD)**

**EP 1 217 024 B1**

**Description**

The present invention relates to a process for the preparation of spinnable and dyeable polyester resins.

More specifically, the present invention relates to a process for the preparation of spinnable and dyeable polyester resins modified by means of comonomers supporting anionic groups.

Even more specifically, the present invention relates to a process for the preparation of spinnable and dyeable polybuthyleneterephthalate and its use in the preparation of fibres and fabrics.

Polybutyleneterephthalate (PBT) is one of the main thermoplastic crystalline polyester resins used by the transformation industry for producing moulded articles for use in the car and electric industries, or for producing fibres mainly used in the textile industry. In particular, PBT is widely used in the production of fibres for elastic fabrics as the high elastic recovery, of the yarn itself obtained from this material, ensures comfortable wear and good dimensional stability.

Textile polymers based on polyester are traditionally subjected, once transformed into yarns or staples, to a dyeing process which uses dyes dispersed inside the fibre. The dyeing process involves introducing the pigment inside the polymeric matrix by means of carriers, generally consisting of toxic products, or by the use of high temperatures and high pressures, with a consequent high energy consumption. In both methods, the dye exploits the presence of amorphous zones in the polymeric matrix of the fibre where it is easier for it to place and remain.

To solve the above drawbacks and others, such as the impossibility of obtaining fibres and fabrics with bright colours and/or the risk of the formation of micro-fractures in the fibre which could damage the fabric after a certain period of time, the use of cationic dyes has been proposed, such as certain quaternary ammonium salts or certain heterocyclic compounds containing quaternary nitrogen, already used for acrylic fibres, which do not require the use of carriers, allow the production of brightly-coloured fibres and do not damage the fibre in the dyeing phase with the consequent production of fabrics having a greater resistance to wear.

The use of cationic dyes, however, implies the presence of receptor sites in the polymeric chain and therefore its modification during the polymerization phase. Published Japanese patent application JP 8074124 describes a process for the preparation of PBT capable of giving dyeable fibres by means of cationic dyes, which comprises the polymerization of terephthalic acid and 1,4-butanediol with 0.5-5% in moles of a comonomer having formula (I):

$$X_1\text{-}D(SO_3M)\text{-}X_2 \qquad (I)$$

wherein $X_1$ and $X_2$, the same or different, represent functional groups capable of forming ester bonds, D is a trivalent aromatic ring, M is a metal or alkylphosphonium group. The polymerization is catalyzed by a derivative of titanium according to the disclosures of the known art, for example French patent 1,331,923.

The polymer obtained, however, has a low resistance to oxidation and requires the addition of antioxidants selected from phenol phosphites and/or phenol hypophosphites which, according to the Japanese patent, are already added in the polymerization phase. The presence of these additives, also contemplated in traditional products, not only negatively influences the end-product with respect to the production costs but may also cause a reduction in certain physico-mechanical properties of the fibres and consequently of the fabrics.

The Applicant has now found a process for the preparation of polyester resins which solves the problems of the known art, as it allows spinnable polymers to be obtained, which are not only easily dyeable but also have an intrinsic resistance to oxidation and consequently do not require any additive dedicated to this purpose.

The object of the present invention therefore relates to a process for the preparation of spinnable and dyeable polyester resins which comprises reacting, in substantially equimolecular ratios, an alkylenediol, in which the alkylene group contains 3 or 4 carbon atoms, with a mixture containing a derivative of terephthalic acid and a comonomer having general formula (I):

$$X_1\text{-}D(SO_3M)\text{-}X_2 \qquad (I)$$

wherein $X_1$ and $X_2$, the same or different, represent ester functional groups, D is a trivalent aromatic ring, M is a metal or an alkylphosphonium group, in the presence of a catalyst based on titanium having general formula (II):

$$(RO)_2TiL_2 \qquad (II)$$

wherein R represents a $C_1$-$C_{10}$ (iso)alkyl radical and L is a diketone having the formula $R_2\text{-}CO\text{-}(CHR_1)_n\text{-}CO\text{-}$ wherein $R_1$ and $R_2$, the same or different, represent a hydrogen atom or an (iso)alkyl, aryl, alkylaryl group having from 1 to 10 carbon atoms and n is zero or is an integer ranging from 1 to 4.

According to the present invention, the preferred spinnable and dyeable polyester resin is polybutyleneterephthalate obtained from a derivative of terephthalic acid and 1,4-butanediol. A derivative of terephthalic acid essentially

refers to $C_1$-$C_4$ alkyl esters of terephthalic acid and, in particular, dimethylterephthalate. Furthermore, the derivative of terephthalic acid is used in a mixture with the ionic comonomer having general formula (I) in such quantities that the latter has a concentration ranging from 0.5 to 5% in moles.

In addition to the derivative of terephthalic acid, alkylenediol and comonomer having formula (I), it is also possible to use other comonomers, for example in a quantity ranging from 0.5 to 5% in moles with respect to the total, in order to improve the physico/mechanical properties of the fibres or filaments obtained from the polyester resin. In particular, it is possible to use a chain modifier having formula (III):

$$X_1\text{-}(CH_2)_m\text{-}X_2 \qquad \text{(III)}$$

wherein $X_1$ and $X_2$ have the meaning specified above and m is an integer ranging from 1 to 10.

The preferred ionic comonomer according to the present invention is that in which D is the radical deriving from isophthalic acid, $X_1$ and $X_2$ are two $CH_3COO$- units and M is an alkaline metal such as sodium. Details on the preparation of these comonomers are available in Chemical Abstract 133(7)89275d, 129(16)202725h, 123(18)231144z.

Any catalyst having general formula (II) can be used in the process, object of the present invention, even if those in which R is n-butyl or i-propyl, L is acetylacetone and n is 1, are preferred.

The catalysts having general formula (II) can be prepared separately, and subsequently added to the polymerization mixture, or they can be prepared directly in situ in the reaction medium. In this latter case, a titanium alcoholate having the formula $Ti(OR)_4$ and a diketone having the formula $R_2$-CO-$(CHR_1)_n$-CO-$R_2$ are added to the monomers in molar ratios alcoholate/diketone ranging from 0.5 to 5. Whether the catalyst be prepared separately or in situ, it is added in such quantities as to have a concentration of titanium ranging from 60 to 300 ppm.

The polymerization of the polyester takes place in two steps. In the first step the derivative of terephthalic acid and the ionic comonomer, together with the alkylenediol, are subjected to a transesterification reaction carried out at a temperature of 200-230°C, obtaining a mixture of oligomers. This mixture is then polymerized, operating at temperatures ranging from 240 to 260°C and at pressures of 100-150 Pa. The same catalyst is used in both steps.

At the end of the polymerization, the copolymer has an intrinsic viscosity, measured from solutions in o-chlorophenol at 35°C in concentrations of 0.6 g per 50 ml, using a Shotte-Gerate automatic viscometer, ranging from 0.6 to 1.5 dl/g.

The modified copolymer obtained with the process, object of the present invention, can be spun according to the following conditions: temperature of the polymer at the pack inlet 260°C, spinning rate 2800 m/min, to give continuous fibres (final yarn titer of 78 dtex/36 filaments) or staple fibres, with the following characteristics: POY (pre-oriented-yarn) titer 136 dtex, tenacity 15.2 cN/tex, elongation 92%, hot water shrinkage (H.W.S.) 3.8%, DTY (drawn-textured-yarn) titer 102 dtex, tenacity 16.1 cN/tex, elongation 22.9%, FDY (full-drawn-yarn) titer 81.7 dtex, tenacity 29.2 cN/tex, elongation 10.7%, boiling water shrinkage (B.W.S.) 12.8%. Once spun, a dyeing process can be effected with bright, deep cationic type colours, described for example in Ullmann's Encyclopedia of Industrial Chemistry vol. A(9)73, vol. A(20)371, which do not have equivalents in dispersed colours. Furthermore, the filament of the present copolymer can be coupled with a filament from a polyester homopolymer or with filaments of the natural or synthetic type, to produce particular stylistic effects with the use of combined dispersed and cationic dye baths.

The colouring and characterization of the dyed filament are carried out according to the method described below.

250 ml of an aqueous solution of cationic dye, such as malachite green or maxilon black, with a known concentration (1 g/l), are charged into a round-bottomed flask with at least two emery necks, one containing a thermometer and the other a cooler to avoid variations in concentration of the dye during boiling.

The bath temperature is brought to T = 50°C and pH = 4-4.5 with acetic acid. The yarn is added and the temperature is increased to 70°C in 20 minutes.

Maintaining the bath at T = 70°C, a dyeing or equalizing aid is added, over a period of 10 minutes, at a concentration of 2 g/l. The temperature of the bath is then raised to 100°C in 30 minutes, the stirring being kept constant for a duration of 60 minutes. The solution is finally cooled and a washing is effected at pH = 4 with a saline additive which eliminates any possible traces of excess dye remaining adsorbed and not bound to the fibre. The operation lasts 20 minutes at T = 70°C.

The fibre dyeability parameter is measured is an absorption constant (Ks). This parameter indicates the maximum dye absorption capacity of a given fibre. It is directly correlated to the number of acid groups available. For calculating said parameter, a spectrophotometric reading is effected, at the wave-length corresponding to the maximum absorption (6.18 nm for malachite green), of the dyeing solution before and after the dyeing process itself. The absorbance value is expressed in concentration by previously effecting a calibration line and consequently the difference in concentration represents the quantity of dye absorbed by the fibre. The result is expressed according to the following formula:

$$Ks = (Ci-Cf)-V/10-P$$

wherein
Ci = dye initial concentration
Cf = dye final concentration
V = solution volume (ml)
P = fibre weight (g)

The Ks value is corresponding to the quantity, expressed in grams, of dye absorbed by 100 grams of fibre. Knowing the molecular weight of the dye used in the dyeing process, it is possible to deduce the number of ionic sites present in the copolymer and involved in the binding with the dye.

Some illustrative but non-limiting examples are provided for a better understanding of the present invention and for its embodiment.

EXAMPLE 1 (Comparative)

7720 g (40.1 moles) of dimethylterephthalate, 280 g (0.95 moles) of dimethylisophthalate sodium sulfate and 4825 g (53.6 moles) of 1,4-butanediol are charged into a 20 litre steel reactor. The reactor is heated to 145°C and 6.86 g (20.2 mmoles) of tetra n-butyl titanate are added to the molten product. The reaction mixture is gradually brought to 230°C, allowing the complete distillation of the methanol.

When the distillation is complete, the stabilizer, such as U626 of General Electric (bis(2,4-diter-butylphenyl) pentaerythritol diphosphite), is added in a concentration of 0.1% by weight with respect to the polymer.

After reducing the pressure to 100 Pa, the temperature is raised to 255°C and the mixture is left to react, allowing the excess 1,4-butanediol to be removed. The reactor is brought to atmospheric pressure with nitrogen and the polymer is extruded and granulated. The total synthesis time, starting from the addition of the catalyst, was 200 minutes. The intrinsic viscosity of the copolymer obtained is 0.646 dl/g. It is subjected to the thermo-oxidative stability test by the sampling at increasing extrusion times and the results are indicated in Table 1:

TABLE 1

| Extrusion time (min) | I.V. (dl/g) | Col L | Col b | Yi |
|---|---|---|---|---|
| 10 | 0.646 | 84.88 | 2.94 | 4.85 |
| 20 | 0.621 | 84.71 | 3.03 | 5.01 |
| 30 | 0.614 | 84.78 | 3.21 | 5.31 |
| 45 | 0.606 | 84.97 | 3.27 | 5.39 |

The Col L, Col b, Yi values were obtained by measuring the colour distributed by the copolymer according to the Cielab scale with a colorimeter model BYK Gardner.

The copolymer was spun and dyed with maxilon black by means of the procedure described above, the Ks value proved to be equal to 2.1.

EXAMPLE 2

The same procedure is adopted as described in Example 1, except that the catalyst is substituted with 7.35 g (20.2 mmoles) of Ti(acetylacetone)$_2$(isopropyl)$_2$ and the additive U626 is eliminated. The total synthesis time is 180 minutes. The extruded and granulated polymer has an intrinsic viscosity of 0.659 dl/g.

The sampling during the extrusion process corresponds to the analytical data indicated in Table 2.

TABLE 2

| Extrusion time (min) | I.V. (dl/g) | Col L | Col b | Yi |
|---|---|---|---|---|
| 10 | 0.659 | 84.51 | 3.15 | 5.22 |
| 20 | 0.641 | 84.36 | 3.14 | 5.20 |

(continued)

| Extrusion time (min) | I.V. (dl/g) | Col L | Col b | Yi |
|---|---|---|---|---|
| 30 | 0.619 | 84.95 | 3.27 | 5.40 |
| 45 | 0.610 | 85.22 | 3.28 | 5.40 |

The copolymer was spun and dyed as in the previous example.

The Ks value proved to be equal to 2.35.

EXAMPLE 3

The same procedure is adopted as described in Example 2 except that 177 g (1.21 moles) of adipic acid are added. The latter is added at the end of the transesterification process at a temperature of 225°C, awaiting the complete distillation of the reaction water. The total synthesis time is 200 minutes. The extruded and granulated polymer has an intrinsic viscosity of 0.663 dl/g.

The sampling during the extrusion process corresponds to the analytical data indicated in Table 3.

TABLE 3

| Extrusion time (min) | I.V. (dl/g) | Col L | Col b | Yi |
|---|---|---|---|---|
| 10 | 0.663 | 82.21 | 3.76 | 8.10 |
| 20 | 0.655 | 82.80 | 3.65 | 7.85 |
| 30 | 0.646 | 82.32 | 3.91 | 8.44 |
| 45 | 0.645 | 82.36 | 4.06 | 8.78 |

The copolymer was spun and dyed as in the previous example.

The Ks value proved to be equal to 2.5.

**Claims**

1. A process for the preparation of spinnable and dyeable polyester resins having an intrinsic viscosity, measured from solutions in o-chlorophenol at 35°C in concentrations of 0.6 g per 50 ml, by means of a Shotte-Gerate automatic viscometer, ranging from 0.6 to 1.5 dl/g which consists of reacting, in substantially equimolecular ratios, one alkylenediol, in which the alkylene group contains 3 or 4 carbon atoms, with a mixture consisting of a derivative of terephthalic acid and a comonomer having general formula (I):

$$X_1-D(SO_3M)-X_2 \qquad (I)$$

wherein $X_1$ and $X_2$, the same or different, represent functional ester groups, D is a trivalent aromatic ring, M is a metal or an alkylphosphonium group, in the sole presence of a catalyst based on titanium having general formula (II):

$$(RO)_2TiL_2 \qquad (II)$$

wherein R represents a $C_1$-$C_{10}$ (iso)alkyl radical and L is a diketone having the formula $R_2$-CO-$(CHR_1)_n$-CO- wherein $R_1$ and $R_2$, the same or different, represent a hydrogen atom or an (iso)alkyl, aryl, alkylaryl group having from 1 to 10 carbon atoms and n is zero or an integer ranging from 1 to 4; said derivative of terephthalic acid being used in a mixture with the ionic comonomer having general formula (I) in such quantities that the latter has a concentration ranging from 0.5 to 5% in moles; said reaction mixture optionally comprising other comonomers in a quantity ranging from 0.5 to 5% in moles with respect to the total, selected from those having formula (III):

$$X_1-(CH_2)_m-X_2 \qquad (III)$$

wherein $X_1$ and $X_2$ have the meaning specified above and m is an integer ranging from 1 to 10.

2. The process according to claim 1, wherein the spinnable and dyeable polyester resin is polybuteleneterephthalate.

3. The process according to any of the previous claims, wherein the ionic comonomer is that in which D is the radical deriving from isophthalic acid, $X_1$ and $X_2$ are two $CH_3COO-$ units and M is sodium.

4. The process according to any of the previous claims, wherein in the catalyst having general formula (II), R is n-butyl or i-propyl, L is acetylacetone and n is 1.

5. The process according to any of the previous claims, wherein the catalysts having general formula (II) are prepared separately and subsequently added to the polymerization mixture or are prepared directly in situ in the reaction medium.

6. The process according to any of the previous claims, wherein the catalyst is added in such quantities as to have a concentration of titanium ranging from 60 to 300 ppm.

7. A spinnable and dyeable polyester resin obtainable by the process according to any of the previous claims, having an intrinsic viscosity, measured from solutions in o-chlorophenol at 35°C in concentrations of 0.6 g per 50 ml, by means of a Shotte-Gerate automatic viscometer, ranging from 0.6 to 1.5 dl/g.

8. Use of the resin according to claim 7 in the preparation of continuous filaments and/or dyeable fibres.

9. Continuous filaments and/or dyeable fibres obtained with the polyester resins according to claim 7.


**Patentansprüche**

1. Verfahren zur Herstellung von verspinnbaren und färbbaren Polyesterharzen mit einer intrinsischen Viskosität, welche aus Lösungen in o-Chlorphenol bei 35 °C in Konzentrationen von 0,6 g pro 50 ml mittels eines Shotte-Gerate automischen Viskosimeters gemessen wird, in einem Bereich zwischen 0,6 und 1,5 dl/g, bestehend aus Reagieren, in im Wesentlichen äquimolaren Verhältnissen, eines Alkylendiols, in dem die Alkylengruppe 3 oder 4 Kohlenstoffatome aufweist, mit einer Mischung bestehend aus einem Derivat von Terephthalsäure und einem Comonomer mit der allgemeinen Formel (I):

$$X_1\text{-D}(SO_3M)\text{-}X_2 \qquad (I),$$

worin $X_1$ und $X_2$, gleich oder verschieden, funktionelle Estergruppen bedeuten, D ein trivalenter aromatischer Ring ist, M ein Metall oder eine Alkylphosphoniumgruppe ist, in der alleinigen Gegenwart eines Katalysators, welcher auf Titan mit der allgemeinen Formel (II) basiert:

$$(RO)_2TiL_2 \qquad (II),$$

worin R ein $C_1$-$C_{10}$-(Iso)alkylradikal bedeutet und L ein Diketon mit der allgemeinen Formel $R_2$-CO(CHR$_1$)$_n$-CO- ist, worin $R_1$ und $R_2$, gleich oder verschieden, ein Wasserstoffatom oder eine (Iso)alkyl-, Aryl-, Alkylarylgruppe mit 1 bis 10 Kohlenstoffatomen sind und n null oder eine ganze Zahl in einem Bereich zwischen 1 und 4 ist, wobei das Derivat von Terephthalsäure in einer Mischung mit dem ionischen Comonomer mit der allgemeinen Formel (I) in solchen Mengen eingesetzt wird, dass die letztgenannte Verbindung eine Konzentration in einem Bereich zwischen 0,5 und 5 Mol-% aufweist, wobei die Reaktionsmischung optional andere Comonomere in einer Menge in einem Bereich zwischen 0,5 und 5 Mol-% bezogen auf die Gesamtmenge enthält, ausgewählt aus solchen mit der Formel (III):

$$X_1\text{-}(CH_2)_m\text{-}X_2 \qquad (III),$$

worin $X_1$ und $X_2$ die zuvor spezifizierten Bedeutungen aufweisen und m eine ganze Zahl in einem Bereich zwischen 1 und 10 ist.

2. Verfahren nach Anspruch 1, wobei das verspinnbare und färbbare Polyesterharz Polybutylenterephthalat ist.

**3.** Verfahren nach einem der vorhergehenden Ansprüche, wobei das ionische Comonomer dasjenige ist, bei dem D das von Isophthalsäure abgeleitete Radikal ist, $X_1$ und $X_2$ zwei $CH_3COO$-Einheiten sind und M Natrium ist.

**4.** Verfahren nach einem der vorhergehenden Ansprüche, wobei in dem Katalysator mit der allgemeinen Formel (II) R n-Butyl oder i-Propyl ist, L Acetylaceton ist und n 1 ist.

**5.** Verfahren nach einem der vorhergehenden Ansprüche, wobei die Katalysatoren mit der allgemeinen Formel (II) getrennt voneinander hergestellt werden und nacheinander zu der Polymerisationsmischung zugegeben werden oder direkt in situ in dem Reaktionsmedium hergestellt werden.

**6.** Verfahren nach einem der vorhergehenden Ansprüche, wobei der Katalysator in solchen Mengen zugegeben wird, dass dieser eine Konzentration an Titan in einem Bereich zwischen 60 und 300 ppm aufweist.

**7.** Verspinnbares und färbbares Polyesterharz erhältlich durch ein Verfahren nach einem der vorhergehenden Ansprüche mit einer intrinsischen Viskosität, welche aus Lösungen in o-Chlorphenol bei 35 °C in Konzentrationen von 0,6 g pro 50 ml mittels eines Shotte-Gerate automatischen Viskosimeters gemessen wird, in einem Bereich zwischen 0,6 und 1,5 dl/g.

**8.** Verwendung des Harzes nach Anspruch 7 bei der Herstellung kontinuierlicher Filamente und/oder färbbarer Fasern.

**9.** Kontinuierliche Filamente und/oder färbbare Fasern erhalten mit den Polyesterharzen nach Anspruch 7.

**Revendications**

**1.** Procédé pour la préparation de résines de poly(ester) filables et aptes à la teinture ayant une viscosité intrinsèque, mesurée à partir de solutions dans du o-chlorophénol à 35 °C en des concentrations de 0,6 g par 50 mL, au moyen d'un viscosimètre automatique Shotte-Gerate allant de 0,6 à 1,5 dL/g qui consiste en la réaction, en des rapports sensiblement équimolaires, d'un alkylènediol, dans lequel le groupe alkylène contient 3 ou 4 atomes de carbone, avec un mélange constitué d'un dérivé d'acide téréphtalique et d'un comonomère ayant la formule générale (I) :

$$X_1\text{-}D(SO_3M)\text{-}X_2 \qquad (I)$$

dans laquelle $X_1$ et $X_2$, identiques ou différents, représentent des groupes ester fonctionnels, D est un cycle aromatique trivalent, M est un métal ou un groupe alkylphosphonium, dans la seule présence d'un catalyseur à base de titane ayant la formule générale (II) :

$$(RO)_2TiL_2 \qquad (II)$$

dans laquelle R représente un radical (iso)alkyle en $C_1$ à $C_{10}$ et L est une dicétone ayant la formule $R_2\text{-}CO\text{-}(CHR_1)_n\text{-}CO\text{-}$ dans laquelle $R_1$ et $R_2$, identiques ou différents, représentent un atome d'hydrogène ou un groupe (iso)alkyle, aryle, alkylaryle comportant de 1 à 10 atomes de carbone et n vaut zéro ou est un nombre entier allant de 1 à 4 ; ledit dérivé d'acide téréphtalique étant utilisé dans un mélange avec le comonomère ionique ayant la formule générale (I) dans des quantités telles que ce dernier a une concentration allant de 0,5 à 5 % en moles ; ledit mélange de réaction comprenant facultativement d'autres comonomères en une quantité allant de 0,5 à 5 % en moles par rapport au total, sélectionnés parmi ceux ayant la formule (III) :

$$X_1\text{-}(CH_2)_m\text{-}X_2 \qquad (III)$$

dans laquelle $X_1$ et $X_2$ ont la signification spécifiée ci-dessus et m est un nombre entier allant de 1 à 10.

**2.** Procédé selon la revendication 1, dans lequel la résine de poly(ester) filable et apte à la teinture est du poly(téréphtalate de butylène).

**3.** Procédé selon l'une quelconque des revendications précédentes, dans lequel le comonomère ionique est celui dans lequel D est le radical provenant de l'acide isophtalique, $X_1$ et $X_2$ sont deux motifs $CH_3COO$- et M est du sodium.

**4.** Procédé selon l'une quelconque des revendications précédentes, dans lequel dans le catalyseur ayant la formule générale (II), R est le n-butyle ou le i-propyle, L est l'acétylacétone et n vaut 1.

**5.** Procédé selon l'une quelconque des revendications précédentes, dans lequel les catalyseurs ayant la formule générale (II) sont préparés séparément et sont ajoutés ultérieurement au mélange de polymérisation ou sont préparés directement in situ dans le milieu de réaction.

**6.** Procédé selon l'une quelconque des revendications précédentes, dans lequel le catalyseur est ajouté en une quantité telle à avoir une concentration de titane allant de 60 à 300 ppm.

**7.** Résine de poly(ester) filable et apte à la teinture pouvant être obtenue par le procédé selon l'une quelconque des revendications précédentes, ayant une viscosité intrinsèque, mesurée à partir de solutions dans du o-chlorophénol à 35 °C en des concentrations de 0,6 g par 50 mL, au moyen d'un viscosimètre automatique Shotte-Gerate, allant de 0,6 à 1,5 dL/g.

**8.** Utilisation de la résine selon la revendication 7, dans la préparation de filaments continus et/ou de fibres aptes à la teinture.

**9.** Filaments continus et/ou fibres aptes à la teinture obtenus avec les résines de poly(ester) selon la revendication 7.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8074124 B

- FR 1331923